# EUROPEAN PATENT SPECIFICATION

(11) **EP 2 586 651 B1**
(45) Date of publication and mention of the grant of the patent: **30.05.2018**
(21) Application number: 12007310.1
(22) Date of filing: 24.10.2012
(51) Int. Cl.: B60N 2/28, B60N 2/427

(54) **Anchorage device adapted for child safety seat system**
Verankerungsvorrichtung, die für ein Kindersicherheitssitzsystem angepasst ist
Dispositif d'ancrage conçu pour un système de siège de sécurité pour enfant

(30) Priority: 24.10.2011 US 201161550452 P; 17.11.2011 US 201161560808 P
(43) Date of publication of application: 01.05.2013
(73) Proprietor: Wonderland Switzerland AG, 6312 Steinhausen (CH)
(72) Inventor: Cheng, Chin-Ming, Central (HK); Su, Yu-Ya, Central (HK)
(74) Representative: Hoefer & Partner Patentanwälte mbB

(56) References cited:
- EP-A1- 2 161 160
- EP-A1- 2 230 125
- DE-A1- 19 946 056
- DE-A1-102008 051 693
- US-A- 5 685 603
- US-A1- 2010 109 215

## Description

### Field of the Invention

The invention relates to an anchorage device applied to a child care system.

An anchorage device according to the preamble portion of claim 1 is known from EP 2 230 125 A1.

### Background of the Invention

Current child safety seats are usually designed to be provided with a fixture for fixing the child safety seat onto a car seat. For example, fixing rings are disposed on a car structure. When the child safety seat is installed on the car seat, the child safety seat is firmly fixed on the car seat by engaging anchoring parts to the fixing rings, for a child to sit thereon.

However, a conventional fixture, the main body of the child safety seat and the fixing rings all are inflexibly connected. Once an accident occurs, the child seated on the child safety seat may be easily hurt by an impact force induced by a sudden impact and directly transferred to the main body of the child safety seat through the fixture nearly with no buffer. Further, the impact force is considered as a trial to the connection stability of the fixture.

Therefore, there is a need for providing a technical solution to solve the above issues.

### Summary of the Invention

With this in mind, the present invention (as defined in claim 1) aims at providing an anchorage device adapted for child safety seat system. The anchorage device can absorb impact energy by use of a cushion mechanism, so as to reduce the influence of the impact energy to a child sitting on the child safety seat.

In order to reduce the influence of the impact energy, as will be seen more clearly from the detailed description following below, according to one embodiment, the anchorage device comprises a connection mechanism, disposed on a seat base equipment of a child safety seat system, an engagement mechanism, capable of being engaged to an anchorage equipment of the car seat system, and a cushion mechanism, disposed between the connection mechanism and the engagement mechanism, such that the cushion mechanism is driven to absorb the impact energy once generated through an occurrence of a relative movement between the connection mechanism and the engagement mechanism.

In this embodiment, the connection mechanism includes a sleeve, disposed on the seat base equipment. The engagement mechanism includes a connection rod, the connection rod and the sleeve passing through with each other, and a snap lock, connected to the connection rod and capable of being engaged to the anchorage equipment. The cushion mechanism includes a cushion body, disposed between the sleeve and the connection rod. The cushion body is driven by the sleeve and the connection rod to be structurally deformed once the relative movement occurs.

In one embodiment reflecting only part of the invention, the cushion body includes a ring wall, sandwiched in between the sleeve and the connection rod, and a plurality of protrusions, formed on the ring wall. The plurality of protrusions are driven by the sleeve and the connection rod to be structurally compressed once the relative movement occurs.

Preferably, the protrusion is of a ring shape.

Preferably, the plurality of protrusions are separately arranged.

Substantially, the ring wall is sleeved on the connection rod and passes through the sleeve, and the protrusions are located between the sleeve and the ring wall.

Additionally, the cushion body includes a protrusive protrusion, formed on the ring wall and abutting against an edge of the sleeve.

Preferably, the cushion body is an elastic member.

Substantially, the sleeve and the connection rod are pivotally connected with each other through the cushion body.

In another aspect, the connection rod and the sleeve slidably pass through each other.

Substantially, the cushion body includes an insertion hole and a cushion slot, formed on the sleeve and communicating with each other, and a cushion pin, passing through the insertion hole, connected to the connection rod and corresponding to the cushion slot. The cushion slot extends along a sliding direction between the connection rod and the sleeve. The cushion slot has a slot dimension in a direction perpendicular to the sliding direction smaller than that of the cushion pin. A slot edge of the cushion slot is structurally expanded since the cushion pin is driven by the sleeve and the connection rod to slide in the sliding direction from the insertion hole into the cushion slot once the relative movement occurs.

Preferably, the connection rod includes a positioning pin, and the sleeve has a slot, provided for the positioning pin to slidably pass therethrough and extending along a sliding direction between the connection rod and the sleeve, so as to guide sliding of the connection rod. According to the invention, the cushion body includes a first circumference wall and a second circumference wall, formed on the sleeve and partially stacked on each other, and an energy absorption pin, passing through the first circumference wall and the second circumference wall and connected to the connection rod. The first circumference wall has a first through slot, for the energy absorption pin to pass therethrough, and the second circumference wall has a second through slot, partially overlapping the first through slot and provided for the energy absorption pin to slidably pass therethrough. The first through slot has an inner dimension equal to that of the energy absorption pin. The second through slot extends along a sliding direction between the connection rod and the sleeve. The second through slot has a slot dimension in the sliding direction larger than that of the first through slot. Once the relative movement occurs, a slot edge of the first through slot is structurally destroyed since the energy absorption pin hits the slot edge of the first through slot and slides into a portion of the second through slot not overlapping the first through slot. According to the invention, the cushion body further includes a third circumference wall, formed on the sleeve and stacked on the second circumference wall. The third circumference wall has a third through slot, partially overlapping the first through slot and the second through slot and provided for the energy absorption pin to slidably pass therethrough. The third through slot extends along the sliding direction. The third through slot has a slot dimension in the sliding direction larger than that of the second through slot. A slot edge of the second through slot is structurally destroyed since the energy absorption pin hits the slot edge of the second through slot and slides into a portion of the third through slot not overlapping the second through slot once the relative movement occurs. In an alternative embodiment reflecting only part of the invention, the cushion body is driven by the sleeve and the connection rod to be structurally compressed or elongated once the relative movement occurs. Preferably, the cushion body is an elastic member.

Substantially, the sleeve has a cavity and an opening, communicating with the cavity. The connection rod slidably passes through the opening. The cushion body is connected to the connection rod and the sleeve and is accommodated in the cavity.

Preferably, the connection rod includes a sliding part, slidably accommodated in the cavity, and the sleeve includes a blocking part, coordinating with the sliding part for preventing the connection rod from departing from the sleeve.

Preferably, the connection rod includes a positioning bolt, and the sleeve has a guiding slot, provided for the positioning bolt to slidably pass therethrough and extending along a sliding direction between the connection rod and the sleeve, so as to guide sliding of the connection rod and prevent the connection rod from departing from the sleeve.

Compared with the prior art, once collision or emergency braking on the car occurs, the cushion mechanism can absorb the impact energy generated through the collision or emergent braking to prevent the child seated on the seat base equipment from being hurt. Furthermore, the engagement stability of the engagement mechanism to the anchorage equipment can be maintained, so as to avoid risk of the child safety seat system disengaging from the car seat system.

The invention is defined by the independent claim.

### Brief Description of the Drawings

In the following, the invention is further illustrated by way of example, taking reference to the accompanying drawings, wherein:
FIG. 1 is a perspective view of a child safety seat system assembled to a car seat system according to a first embodiment reflecting only part of the invention;
FIG. 2 is a rear sectional view along the line 2'-2' in FIG. 1;
FIG. 3 is a perspective view of a cushion mechanism according to said first embodiment;
FIG. 4 is a perspective view of the child safety seat system assembled to the car seat system according to a second embodiment reflecting only part of the invention;
FIG. 5 is a side sectional view along the line 5'-5' in FIG. 4;
FIG. 6 is a top sectional view of an anchorage device, connected between a seat base equipment and an anchorage equipment, with no structural deformation according to a third embodiment according to the invention;
FIG. 7 is a side sectional view of the anchorage device, connected between the seat base equipment and the anchorage equipment, with no structural deformation according to said third embodiment according to the invention;
FIG. 8 is a top sectional view of the anchorage device, connected between the seat base equipment and the anchorage equipment, with a first structural deformation according to said third embodiment according to the invention;
FIG. 9 is a top sectional view of the anchorage device, connected between the seat base equipment and the anchorage equipment, with a second structural deformation according to said third embodiment according to the invention;
FIG. 10 is a side sectional view of an anchorage device connected between a seat base equipment and an anchorage equipment according to a fourth embodiment reflecting only part of the invention; and
FIG. 11 is a side sectional view of an anchorage device connected between a seat base equipment and an anchorage equipment according to a fifth embodiment reflecting only part of the invention.

### Detailed Description

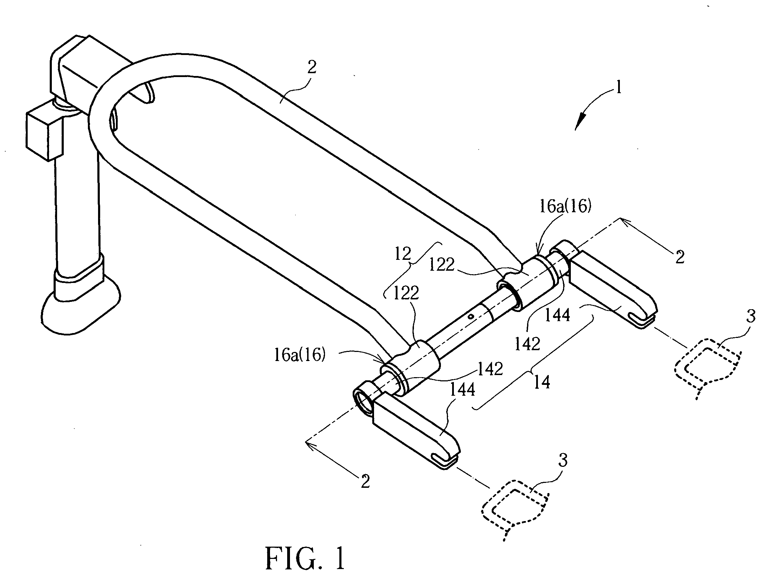

Please refer to FIG. 1, which is a perspective view of a child safety seat system assembled to a car seat system according to said first embodiment. An anchorage device 1 includes a connection mechanism 12, disposed on a seat base equipment 2 of the child safety seat system, an engagement mechanism 14, capable of being engaged to an anchorage equipment 3 (shown only by its lock rings) of the car seat system, and a cushion mechanism 16, disposed between the connection mechanism 12 and the engagement mechanism 14. Therefore, the child safety seat system is engaged to the car seat system by the engagement mechanism 14, such that once a relative movement between the connection mechanism 12 and the engagement mechanism 14 occurs to generate impact energy, the cushion mechanism 16 is driven to absorb the impact energy. It is added that in FIG. 1, the seat base equipment 2 is shown only by its structural frame. In practice, the structural frame will be connected with a casing. The connection mechanism 12 is connected to the structural frame. Furthermore, the front end of the seat base equipment 2 can be connected to a support, for supporting the child safety seat system on a car ground when the child safety seat system is disposed on a car seat.

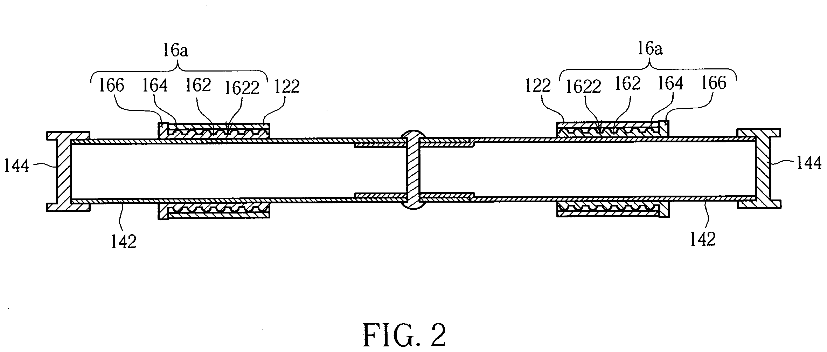

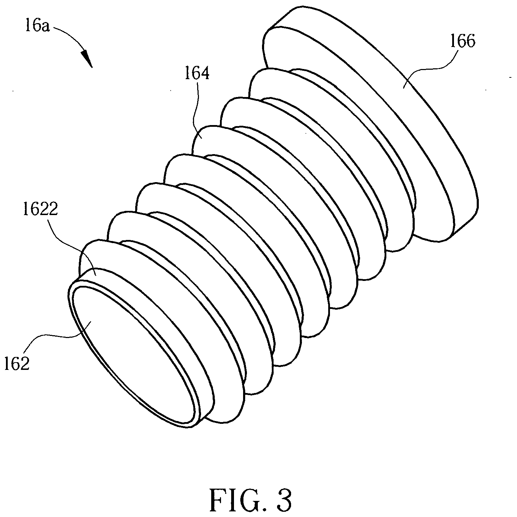

Please also refer to FIG. 2 and FIG. 3. FIG. 2 is a rear sectional view along the line 2'-2' in FIG. 1; therein, for simple drawing, only the sectional profile is shown in FIG. 2. FIG. 3 is a perspective view of the cushion mechanism 16 according to said first embodiment. Further, in the embodiment, the connection mechanism 12 includes sleeves 122, disposed on the seat base equipment 2. The engagement mechanism 14 includes connection rods 142, passing through the sleeves 122 to be connected thereto respectively, and snap locks 144, connected to the connection rods 142 and capable of being engaged to the anchorage equipment 3. In addition, the hooking mechanism of the snap locks 144 to the anchorage equipment 3 can use ISOFIX (i.e. devices in accordance with the specification of International Organization for Standardization for anchorage structure for car seats). The cushion mechanism 16 includes cushion bodies 16a, disposed between the sleeves 122 and the connection rods 142 correspondingly. Once the relative movement between the connection mechanism 12 and the engagement mechanism 14 occurs (such as collision or emergency braking on the car), the cushion body 16a is driven by the corresponding sleeve 122 and the corresponding connection rod 142 to be structurally deformed for absorbing the impact energy. In the embodiment, the connection mechanism 12, the engagement mechanism 14, and the cushion mechanism 16 are disposed symmetrically in structure at the left and right sides of the child safety seat system. Therefore, the sleeves 122, the connection rods 142, the snap locks 144, and the cushion bodies 16a are disposed symmetrically in structure at the left and right sides of the child safety seat system. In principle, the following description will illustrate the components at one side of the child safety seat system; description for the components at the other side of the child safety seat system will not be described in addition.

In the embodiment, the sleeve 122 and the connection rod 142 are pivotally connected to each other through the cushion body 16a. In detail, the cushion body 16a includes a ring wall 162, sandwiched in between the sleeve 122 and the connection rod 142, a plurality of protrusions 164, formed on an outer surface 1622 of the ring wall 162, and a protrusive protrusion 166, formed on the ring wall 162 and abutting against an edge of the sleeve 122. The ring wall 162 is sleeved on the connection rod 142 and passes through the sleeve 122. The protrusions 164 are located between the sleeve 122 and the ring wall 162, such that once the relative movement occurs, the protrusions 164 are driven by the sleeve 122 and the connection rod 142 to be structurally compressed to absorb the impact energy. It can provide the cushion body 16a a positioning effect to a certain extent that the edge of the sleeve 122 is used to stop the protrusive protrusion 166. In practice, the other end of the cushion body 16a opposite to the protrusive protrusion 166 can be constrained by the casing connected to the structural frame of the seat base equipment 2 simultaneously, so as to perform a total positioning to the cushion body 16a. In a practical application, once a collision or emergency braking on the car occurs, the snap lock 144 is still kept in engaging with the anchorage equipment 3. The sleeve 122 will move under inertia effect relative to the connection rod 142 which is fixedly connected to the snap lock 144, so as to compress the protrusions 164 of the cushion body 16a so that the protrusions 164 generates a structural compression deformation to absorb energy to achieve the purpose of reducing the influence of the impact, especially to the child sitting on the child safety seat of the child safety seat system.

It is added that in the embodiment, the protrusions 164 are realized by solid ringed protrusions. For example, the protrusions 164 can be realized alternatively by a wrinkle structure formed by the ring wall 162. In principle, the protrusion 164 is practicable, as long as the protrusion 164 has the property of compressively deforming to absorb energy. For example, the protrusions can be realized by a structure with domes. Furthermore, the deformation of the protrusion 164 can be non-elastic or elastic deformation. Non-elastic deformation can absorb energy without releasing the absorbed energy later. Elastic deformation can prolong the time for transferring the impact energy for reducing the impact force to the seat base equipment 2. In the embodiment, the cushion body 16a is an elastic member; that is, the protrusion 164 can be made of elastic material, elastic rubber for example, so that after the influence by the impact, the protrusion 164 can be restored to its original size. The sleeve 122 and the connection rod 142 can be kept connected in their original connection dimension. Moreover, in the embodiment, the protrusions 164 are arranged at intervals, so as to form accommodating spaces for the protrusions 164 to stretch when deforming. It is also added that the protrusive protrusion 166 also is realized by a ringed protrusion. In principle, the protrusive protrusion 166 is practicable, as long as the protrusive protrusion 166 can be stopped by the sleeve 122 to constrain the cushion body 16a from moving relative to the sleeve 122. For example, the protrusive protrusion is realized by a protrusive post.

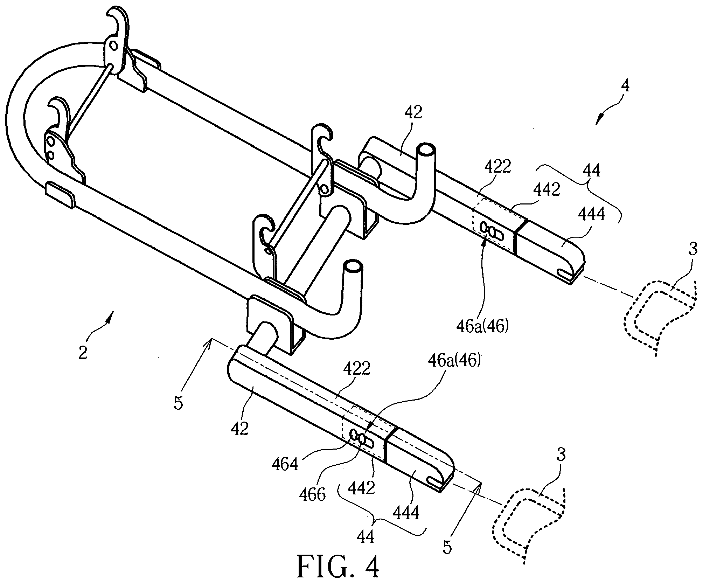

Please refer to FIG. 4, which is a perspective view of the child safety seat system assembled to the car seat system according to said second embodiment. An anchorage device 4 includes a connection mechanism 42, disposed on the seat base equipment 2 of the child safety seat system, an engagement mechanism 44, capable of being engaged to the anchorage equipment 3 (shown only by its lock rings) of the car seat system, and a cushion mechanism 46, disposed between the connection mechanism 42 and the engagement mechanism 44. Therefore, the child safety seat system is engaged to the car seat system by the engagement mechanism 44, such that once a relative movement between the connection mechanism 42 and the engagement mechanism 44 occurs to produce impact energy, the cushion mechanism 46 is driven to absorb the impact energy. In the embodiment, the connection mechanism 42 includes sleeves 422, disposed on the seat base equipment 2. The engagement mechanism 44 includes connection rod 442 (shown by dashed lines in FIG. 4), slidably passing through the sleeves 422 to be connected thereto respectively, and snap locks 444, connected to the connection rods 442 and capable of being engaged to the anchorage equipment 3. The cushion mechanism 46 includes cushion bodies 46a, disposed between the sleeves 422 and the connection rods 442 correspondingly. In the embodiment, the sleeves 422, the connection rods 442, the snap locks 444, and the cushion bodies 46a are disposed symmetrically in structure at the left and right sides of the child safety seat system. Therefore, the following description will illustrate the components at one side of the child safety seat system; description for the components at the other side of the child safety seat system will not be described in addition. Furthermore, the above description for the engagement of the snap locks 144 with the anchorage equipment 3 is also applied herein and will not be repeated. In addition, in the embodiment, the anchorage device 4 is installed on the child safety seat system designed to be with detachable seat and seat base. Hooks which are disposed on the seat base equipment 2 are used for detachably engaging with the seat, which realizes the above detachable engagement design. It is added that in FIG. 4, the seat base equipment 2 is shown only by its structural frame. In practice, the structural frame will be connected with a casing. The connection mechanism 42 is connected to the structural frame.

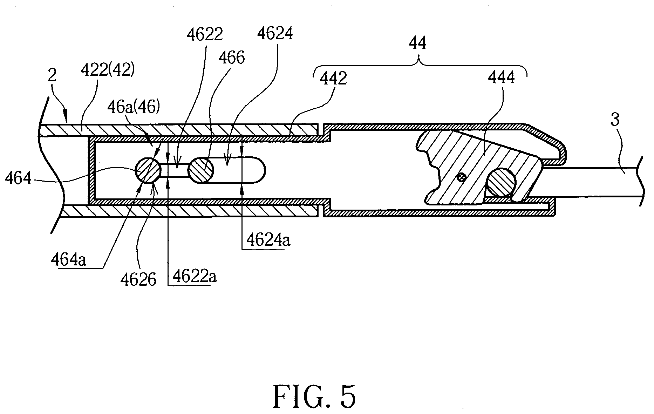

Please also refer to FIG. 5. FIG. 5 is a side sectional view along the line 5'-5' in FIG. 4. In the embodiment, the cushion body 46a includes an insertion hole 4626 and a cushion slot 4622, disposed on the sleeve 422 and communicating with each other, and a cushion pin 464, passing through the insertion hole 4626, connected to the connection rod 442 and corresponding to the cushion slot 4622. The cushion slot 4622 extends along a sliding direction between the connection rod 442 and the sleeve 422. A slot dimension 4622a of the cushion slot 4622 in a direction perpendicular to the sliding direction is smaller than a dimension of the cushion pin 464 in the direction perpendicular to the sliding direction (i.e. an outer diameter 464a of the cushion pin 464). Furthermore, the connection rod 442 includes a positioning pin 466. The sleeve 422 has a slot 4624, provided for the positioning pin 466 to slidably pass through and extending along the sliding direction between the connection rod 442 and the sleeve 422, so as to guide sliding of the connection rod 442. It is added that in the embodiment, the cushion pin 464 and the positioning pin 466 are realized by rivets.

Once a relative movement between the connection mechanism 42 and the engagement mechanism 44 occurs (such as collision or emergency braking on the car), the snap lock 444 is still kept in engaging with the anchorage equipment 3. The sleeve 422 will move under inertia effect relative to the connection rod 442 which is fixedly connected to the snap lock 444, so that the cushion pin 464 is driven by the sleeve 422 and the connection rod 442 to slide in the sliding direction from the insertion hole 4626 into the cushion slot 4622 to render a slot edge of the cushion slot 4622 structurally expansive. The structural deformation of the cushion slot 4622 absorbs the impact energy to achieve the purpose of reducing the influence of the impact, especially to the child sitting on the child safety seat of the child safety seat system. It is added that when the cushion pin 464 slides in the cushion slot 4622, a friction force is generated between the cushion slot 4622 and the cushion pin 464 and also can absorb part of the impact energy, which is conducive to enhancing the absorption effect of the cushion mechanism 46 to the impact energy. In addition, a guiding effect of the slot 4624 to the connection rod 442 is also conducive to guiding the cushion pin 464 to relatively slide in the cushion slot 4622 stably. Besides, a slot dimension 4624a of the slot 4624 in the direction perpendicular to the sliding direction is slightly larger than a dimension of the positioning pin 466 in the direction perpendicular to the sliding direction. Therefore, in principle, the slot 4624 will not be structurally deformed, so the slot 4624 can stop the positioning pin 466 effectively so that the connection rod 442 will not depart from the sleeve 422. Furthermore, in the embodiment, the slot 4624 communicates with the cushion slot 4622.

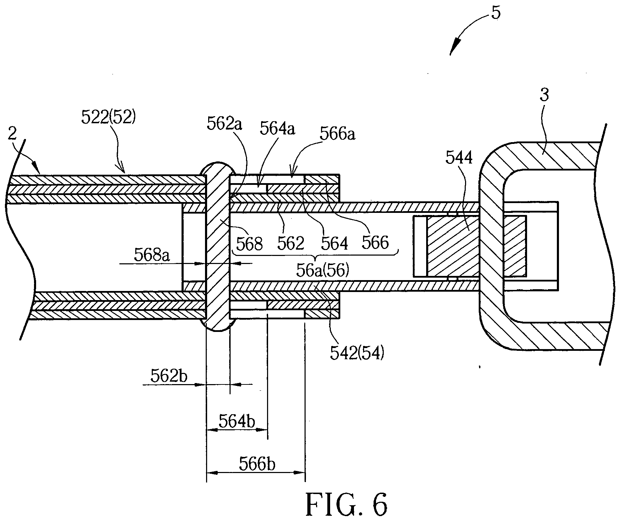

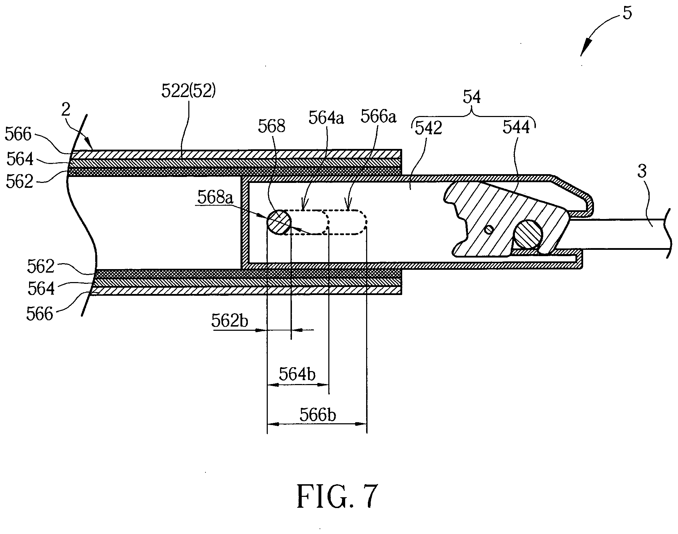

Please refer to FIG. 6 and FIG. 7. FIG. 6 is a top sectional view of an anchorage device 5, connected between the seat base equipment 2 and the anchorage equipment 3, with no structural deformation according to said third embodiment according to the invention. FIG. 7 is a side sectional view of the anchorage device 5, connected between the seat base equipment 2 and the anchorage equipment 3 with no structural deformation according to said third embodiment. For simple illustration, the anchorage device 5 will be illustrated on the assumption that the anchorage device 5 is disposed in the architecture shown by FIG. 4. The anchorage device 5 is also disposed symmetrically in structure, so the following will illustrate only one side structure of the anchorage device 5. Furthermore, the main difference between the anchorage device 5 and the anchorage device 4 is that a cushion mechanism 56 of the anchorage device 5 is realized by a different structure to the cushion mechanism 46 of the anchorage device 4, so the following will focus on the difference. For the description of the remainder structure of the anchorage device 5, please refer to the relevant description of the anchorage device 4, which will not be described in addition.

In this embodiment according to the invention, the connection rod 542 passes through the sleeve 522 to be connected thereto; however, the sleeve 522 may pass through the connection rod 542 to be connected thereto for another design requirement. A cushion body 56a of the cushion mechanism 56 of the anchorage device 5 includes a first circumference wall 562, a second circumference wall 564, and a third circumference wall 566, stacked on one another, and an energy absorption pin 568, passing through the first circumference wall 562, the second circumference wall 564, and the third circumference wall 566 and connected to the connection rod 542. The first circumference wall 562 has a first through slot, for the energy absorption pin 568 to pass therethrough. The second circumference wall 564 has a second through slot 564a (shown by dashed lines in FIG. 7), partially overlapping the first through slot 562a and provided for the energy absorption pin 568 to slidably pass therethrough. The third circumference wall 566 has a third through slot 566a (shown by dashed lines in FIG. 7), partially overlapping the first through slot 562a and the second through slot 564a and provided for the energy absorption pin 568 to slidably pass therethrough. An inner dimension 562b of the first through slot 562a is equal to an outer dimension 568a of the energy absorption pin 568; therein, in practice, the energy absorption pin 568 can be a rivet. The inner size of the first through slot 562a is usually a circle, so is the outer size of the energy absorption pin 568. The second through slot 564a extends along a sliding direction between the connection rod 542 and the sleeve 522. A slot dimension 564b of the second through slot 564a in the sliding direction is larger than a slot dimension 562b of the first through slot 562a in the sliding direction (i.e. the inner dimension of the first through slot 562a). The third through slot 566a extends along the sliding direction. A slot dimension 566b of the third through slot 566a in the sliding direction is larger than the slot dimension 564b of the second through slot 564a in the sliding direction.

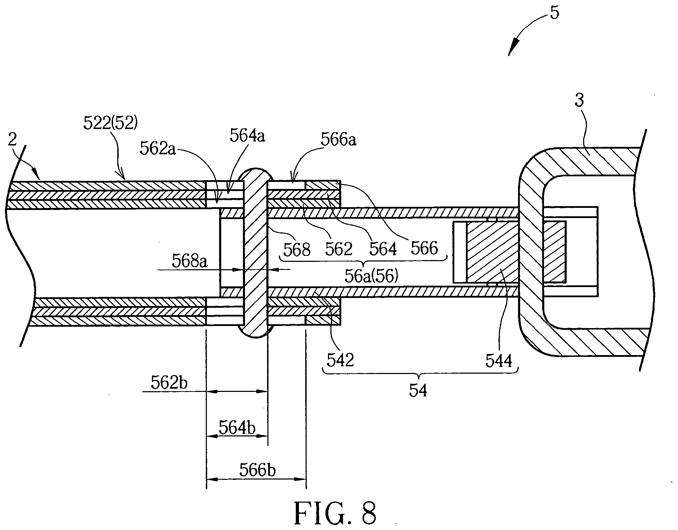

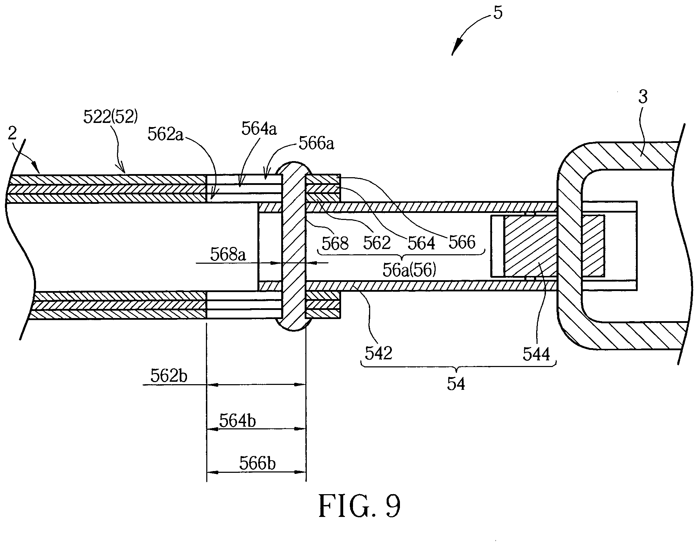

Please also refer to FIG. 8 and FIG. 9. FIG. 8 is a top sectional view of the anchorage device 5, connected between the seat base equipment 2 and the anchorage equipment 3, with the deformed first through slot 562a according to said third embodiment according to the invention. FIG. 9 is a top sectional view of the anchorage device 5, connected between the seat base equipment 2 and the anchorage equipment 3, with the deformed second through slot 564a according to said third embodiment. FIG. 6, FIG. 8, and FIG. 9 are continuous motion diagrams illustrating the cushion body 56a of the cushion mechanism 56 performing cushion effect, shown in sectional view. Therein, for simple illustration, the deformation of the cushion body 56a is indicated by the elongation of the first through slot 562a and the second through slot 564a by the energy absorption pin 568; the actual deformation profiles (such as buckles) are not shown in the figures. In a practical application, once a relative movement between the sleeve 522 of the connection mechanism 52 and the connection rod 542 of the engagement mechanism 54 occurs (such as collision or emergency braking on the car), the snap lock 544 of the engagement mechanism 54 of the anchorage device 5 is still kept in engaging with the anchorage equipment 3. The sleeve 522 will move under inertia effect relative to the connection rod 542 which is fixedly connected to the snap lock 544. The energy absorption pin 568 follows to slide in the sliding direction relative to the first through slot 562a, the second through slot 564a, and the third through slot 566a, so that the energy absorption pin 568 hits a slot edge of the first through slot 562a and slides into a portion of the second through slot 564a not overlapping the first through slot 562a, so as to render the slot edge of the first through slot 562a structurally destruct, as shown by FIG. 8. The structural deformation of the first through slot 562a absorbs the impact energy to achieve the purpose of reducing the influence of the impact, especially to the child sitting on the child safety seat of the child safety seat system. If the impact energy is quite large, the energy absorption pin 568 will continue to hit a slot edge of the second through slot 564a and slides into a portion of the third through slot 566a not overlapping the second through slot 564a, so as to render the slot edge of the second through slot 564a structurally destruct, for further absorbing the impact energy, as shown by FIG. 9. During the deforming process of the second through slot 564a, the slot edge of the first through slot 562a continued being deformed more, which also can absorb the impact energy further. In a practical application, if the impact energy is still large, the energy absorption pin 568 can continue to hit the third through slot 566a to render a slot edge of the third through slot 566a structurally destruct. Simultaneously, the slot edges of the first through slot 562a and the second through slot 564a continue being deformed more, which can absorb the impact energy further.

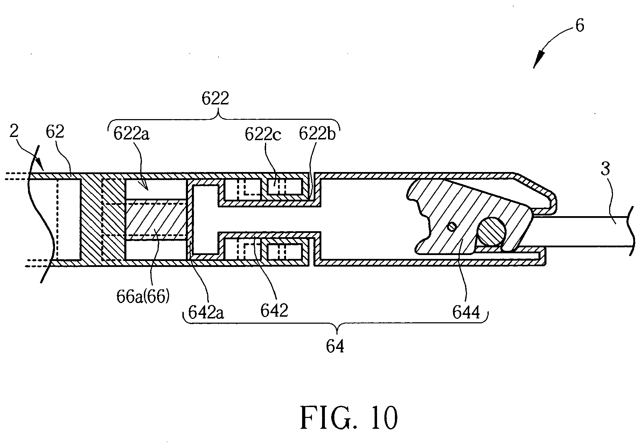

Please refer to FIG. 10, which is a side sectional view of an anchorage device 6 connected between the seat base equipment 2 and the anchorage equipment 3 according to said fourth embodiment. For simple illustration, the anchorage device 6 will be illustrated on the assumption that the anchorage device 6 is disposed in the architecture shown by FIG. 4. The anchorage device 6 is also disposed symmetrically in structure, so the following will illustrate only one side structure of the anchorage device 6. Furthermore, the main difference between the anchorage device 6 and the anchorage device 4 is that a cushion mechanism 66 of the anchorage device 6 is realized by a different structure to the cushion mechanism 46 of the anchorage device 4, so the following will focus on the difference. For the description of the remainder structure of the anchorage device 6, please refer to the relevant description of the anchorage device 4, which will not be described in addition. In the embodiment, the sleeve 622 of the connection mechanism 62 of the anchorage device 6 has a cavity 622a and an opening, communicating with the cavity 622a. The connection rod 642 of the engagement mechanism 64 of the anchorage device 6 slidably passes through the opening 622b. A cushion body 66a of the cushion mechanism 66 is connected to the connection rod 642 and the sleeve 622 and is accommodated in the cavity 622a. In the embodiment, two ends of the cushion body 66a are fixed on the connection rod 642 and the sleeve 622. Further, the connection rod 642 includes a sliding part 642a, slidably accommodated in the cavity 622a. The sleeve 622 includes a blocking part 622c, coordinating with the sliding part 642a for preventing the connection rod 642 from departing from the cavity 622a of the sleeve 622.

Once a relative movement between the sleeve 622 of the connection mechanism 62 and the connection rod 642 of the engagement mechanism 64 occurs (such as collision or emergency braking on the car), the snap lock 644 of the engagement mechanism 64 of the anchorage device 6 is still kept in engaging with the anchorage equipment 3. The sleeve 622 will move under inertia effect relative to the connection rod 642 which is fixedly connected to the snap lock 644, so that the cushion body 66a is driven by an inner wall of the cavity 622a of the sleeve 622 and the sliding part 642a of the connection rod 642 to be structurally compressed or elongated. In FIG. 10, the dashed lines indicate a structural elongation of the cushion body 66a. The structural deformation of the cushion body 66a can absorb the impact energy. The structural deformation can be non-elastic or elastic deformation. Non-elastic deformation can absorb energy without releasing the absorbed energy later. Elastic deformation can prolong the time for transferring the impact energy for reducing the impact force. In the embodiment, the cushion body 66a is an elastic member. For example, the cushion body 66a can be made of elastic material such as elastic rubber, spring and so on, so that after the influence of the impact, the cushion body 66a can be restored to its original size. The sleeve 622 and the connection rod 642 can be kept connected in their original connection dimension. It is added that the above embodiment is based on the fact that the cushion body 66a is elongated to absorb energy. In practice, the cushion body 66a can be compressively deformed by the sliding part 642a and the inner wall of the cavity 622a, which also can absorb energy to perform a cushion effect. It is self-evident without any further illustration.

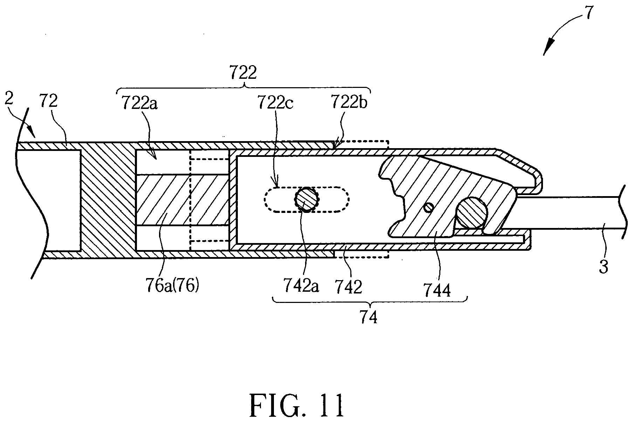

Please refer to FIG. 11, which is a side sectional view of an anchorage device 7 connected between the seat base equipment 2 and the anchorage equipment 3 according to said fifth embodiment. The anchorage device 7 is substantially similar in structure to the anchorage device 6. The following will focus only on the difference. For the other description of the anchorage device 7, please refer to the relevant description of the anchorage device 6, which will not be described in addition. In the embodiment, the connection rod 742 of the anchorage device 7 slidably passes through the opening 722b and includes a positioning bolt 742a. The sleeve 722 has a guiding slot 722c, provided for the positioning bolt 742a to slidably pass through and extending along a sliding direction between the connection rod 742 and the sleeve 722, so as to guide sliding of the connection rod 742 and prevent the connection rod 742 from departing from the cavity 722a of the sleeve 722. Similarly, once a relative movement between the sleeve 722 of the connection mechanism 72 and the connection rod 742 of the engagement mechanism 74 occurs (such as collision or emergency braking on the car), the snap lock 744 of the engagement mechanism 74 of the anchorage device 7 is still kept in engaging with the anchorage equipment 3. The sleeve 722 will move under inertia effect relative to the connection rod 742 which is fixedly connected to the snap lock 744, so that the cushion body 76a of the cushion mechanism 76 is driven by the inner wall of the cavity 722a of the sleeve 722 and the end portion of the connection rod 742 to be structurally compressed or elongated. In FIG. 11, the dashed lines indicate a structural compression of the cushion body 76a. The structural deformation of the cushion body 76a can absorb the impact energy. The above-mentioned relevant description of the cushion body 66a is also applicable to cushion body 76a and is not repeated in addition. It is added that the above embodiment is based on the fact that the cushion body 76a is compressed to absorb energy. In practice, the cushion body 76a can be deformed by elongating by the end portion of connection rod 742 and the inner wall of the cavity 722a, which also can absorb energy to perform cushion effect. It is self-evident without any further illustration.

## Claims

1. An anchorage device (5), comprising a connection mechanism (52) to be disposed on a seat base equipment (2) of a child safety seat system, and an engagement mechanism (54), capable of being engaged to an anchorage equipment (3) of a car seat system, the anchorage device (5) further comprising a cushion mechanism (56), disposed between the connection mechanism (52) and the engagement mechanism (54), such that the cushion mechanism (56) is driven to absorb impact energy once generated through an occurrence of a relative movement between the connection mechanism (52) and the engagement mechanism (54),
**characterized in that** the connection mechanism (52) includes a sleeve (522), disposed on the seat base equipment (2), the engagement mechanism (54) includes a connection rod (542), the connection rod (542) and the sleeve (522) passing through each other, and a snap lock (544), connected to the connection rod (542) and capable of being engaged to the anchorage equipment (3), and the cushion mechanism (56) includes a cushion body (56a), disposed between the sleeve (522) and the connection rod (542), such that the cushion body (56a) is driven by the sleeve (522) and the connection rod (542) to be structurally deformed once the relative movement occurs, wherein the connection rod (542) and the sleeve (522) slidably pass through each other, and wherein the cushion body (56a) includes a first circumference wall (562) and a second circumference wall (564), formed on the sleeve (522) and stacked on each other, and an energy absorption pin (568), passing through the first circumference wall (562) and the second circumference wall (564) and connected to the connection rod (542), the first circumference wall (562) has a first through slot (562a), for the energy absorption pin (568) to pass therethrough, the second circumference wall (564) has a second through slot (564a), partially overlapping the first through slot (562a) and provided for the energy absorption pin (568) to slidably pass therethrough, an inner dimension (562b) of the first through slot (562a) is equal to an outer dimension (568a) of the energy absorption pin (568), the second through slot (564a) extends along a sliding direction between the connection rod (542) and the sleeve (522), and a slot dimension (564b) of the second through slot (564a) in the sliding direction is larger than a slot dimension (562b) of the first through slot (562a) in the sliding direction, such that the energy absorption pin (568) hits a slot edge of the first through slot (562a) and slides into a portion of the second through slot (564a) not overlapping the first through slot (562a), so as to render the slot edge of the first through slot (562a) structurally destruct once the relative movement occurs,
wherein the cushion body (56a) further includes a third circumference wall (566), formed on the sleeve (522), the third circumference wall (566) and the second circumference wall (564) overlapping each other, the third circumference wall (566) has a third through slot (566a), partially overlapping the first through slot (562a) and the second through slot (564a) and provided for the energy absorption pin (568) to slidably pass therethrough, the third through slot (566a) extends along the sliding direction, and a slot dimension (566b) of the third through slot (566a) in the sliding direction is larger than the slot dimension (564b) of the second through slot (564a) in the sliding direction, such that the energy absorption pin (568) hits a slot edge of the second through slot (564a) and slides into a portion of the third through slot (566a) not overlapping the second through slot (564a), so as to render the slot edge of the second through slot (564a) structurally destruct once the relative movement occurs.

## Patentansprüche

1. Verankerungsvorrichtung (5), die einen Verbindungsmechanismus (52), der auf einer Sitzbasisausrüstung (2) eines Kindersicherheitssitzsystems angeordnet ist, sowie einen Eingriffnahmemechanismus (54) umfasst, der mit einer Verankerungsausrüstung (3) eines Autositzsystems in Eingriff gebracht werden kann, wobei die Verankerungsvorrichtung (5) des Weiteren einen Abfederungsmechanismus (56) umfasst, der zwischen dem Verbindungsmechanismus (52) und dem Eingriffnahmemechanismus (54) angeordnet ist, dergestalt, dass der Abfederungsmechanismus (56) angetrieben wird, um Aufprallenergie aufzunehmen, sobald sie durch das Auftreten einer Relativbewegung zwischen dem Verbindungsmechanismus (52) und dem Eingriffnahmemechanismus (54) erzeugt wird,
**dadurch gekennzeichnet, dass**: der Verbindungsmechanismus (52) eine Hülse (522) enthält, die auf der Sitzbasisausrüstung (2) angeordnet ist, der Eingriffnahmemechanismus (54) eine Verbindungsstange (542) enthält, wobei die Verbindungsstange (542) und die Hülse (522) durcheinander hindurch verlaufen, und ein Schnappschloss (544) enthält, das mit der Verbindungsstange (542) verbunden ist und mit der Verankerungsausrüstung (3) in Eingriff gebracht werden kann, und der Abfederungsmechanismus (56) einen Abfederungskörper (56a) enthält, der zwischen der Hülse (522) und der Verbindungsstange (542) angeordnet ist, dergestalt, dass der Abfederungskörper (56a) durch die Hülse (522) und die Verbindungsstange (542) angetrieben wird, um strukturell verformt zu werden, sobald die Relativbewegung stattfindet, wobei die Verbindungsstange (542) und die Hülse (522) gleitend durcheinander hindurch verlaufen, und wobei der Abfederungskörper (56a) eine erste Umfangswand (562) und eine zweite Umfangswand (564) enthält, die auf der Hülse (522) ausgebildet und übereinander angeordnet sind, und einen Energieaufnahmebolzen (568) enthält, der durch die erste Umfangswand (562) und die zweite Umfangswand (564) verläuft und mit der Verbindungsstange (542) verbunden ist, wobei die erste Umfangswand (562) einen ersten Durchgangsschlitz (562a) hat, durch den der Energieaufnahmebolzen (568) hindurch verlaufen kann, wobei die zweite Umfangswand (564) einen zweiten Durchgangsschlitz (564a) hat, der teilweise den ersten Durchgangsschlitz (562a) überlappt und dafür vorgesehen ist, dass der Energieaufnahmebolzen (568) gleitend durch ihn hindurch verläuft, wobei eine Innenabmessung (562b) des ersten Durchgangsschlitzes (562a) gleich einer Außenabmessung (568a) des Energieaufnahmebolzens (568) ist, wobei sich der zweite Durchgangsschlitz (564a) entlang einer Gleitrichtung zwischen der Verbindungsstange (542) und der Hülse (522) erstreckt, und eine Schlitzabmessung (564b) des zweiten Durchgangsschlitzes (564a) in der Gleitrichtung größer ist als eine Schlitzabmessung (562b) des ersten Durchgangsschlitzes (562a) in der Gleitrichtung, dergestalt, dass der Energieaufnahmebolzen (568) gegen einen Schlitzrand des ersten Durchgangsschlitzes (562a) schlägt und in einen Abschnitt des zweiten Durchgangsschlitzes (564a) gleitet, der den ersten Durchgangsschlitz (562a) nicht überlappt, so dass der Schlitzrand des ersten Durchgangsschlitzes (562a) strukturell zerstört wird, sobald die Relativbewegung stattfindet,
wobei der Abfederungskörper (56a) des Weiteren eine dritte Umfangswand (566) enthält, die auf der Hülse (522) ausgebildet ist, wobei die dritte Umfangswand (566) und die zweite Umfangswand (564) einander überlappen, wobei die dritte Umfangswand (566) einen dritten Durchgangsschlitz (566a) hat, der teilweise den ersten Durchgangsschlitz (562a) und den zweiten Durchgangsschlitz (564a) überlappt und dafür vorgesehen ist, dass der Energieaufnahmebolzen (568) gleitend durch ihn hindurch verläuft, wobei sich der dritte Durchgangsschlitz (566a) entlang der Gleitrichtung erstreckt, und eine Schlitzabmessung (566b) des dritten Durchgangsschlitzes (566a) in der Gleitrichtung größer ist als die Schlitzabmessung (564b) des zweiten Durchgangsschlitzes (564a) in der Gleitrichtung, dergestalt, dass der Energieaufnahmebolzen (568) gegen einen Schlitzrand des zweiten Durchgangsschlitzes (564a) schlägt und in einen Abschnitt des dritten Durchgangsschlitzes (566a) gleitet, der nicht den zweiten Durchgangsschlitz (564a) überlappt, so dass der Schlitzrand des zweiten Durchgangsschlitzes (564a) strukturell zerstört wird, sobald die Relativbewegung stattfindet.

## Revendications

1. Dispositif d'ancrage (5), comprenant un mécanisme de liaison (52) devant être disposé sur un équipement de base de siège (2) d'un système de siège de sécurité pour enfant, et un mécanisme d'engagement (54) pouvant s'engager avec un équipement d'ancrage (3) d'un système de siège de voiture, le dispositif d'ancrage (5) comprenant en outre un mécanisme d'amortissement, disposé entre le mécanisme de liaison (52) et le mécanisme d'engagement (54), de sorte que le mécanisme d'amortissement (56) soit entraîné pour absorber l'énergie de choc une fois générée par l'apparition d'un mouvement relatif entre le mécanisme de liaison (52) et le mécanisme d'engagement (54),
**caractérisé en ce que** le mécanisme de liaison (52) comporte un manchon (522), disposé sur l'équipement de base de siège (2), le mécanisme d'engagement (54) comporte une tige de liaison (542), la tige de liaison (542) et le manchon (522) passant l'un à travers l'autre, et un élément de verrouillage par encliquetage (544), relié à la tige de liaison (542) et pouvant s'engager avec l'équipement d'ancrage (3), et le mécanisme d'amortissement (56) comporte un corps d'amortissement (56a), disposé entre le manchon (522) et la tige de liaison (542), de sorte que le corps d'amortissement (56a) soit entraîné par le manchon (522) et la tige de liaison (542) pour être déformé structurellement une fois que le mouvement relatif a lieu, dans lequel la tige de liaison (542) et le manchon (522) coulissent l'un à travers l'autre, et dans lequel le corps d'amortissement (56a) comporte une première paroi circonférentielle (562) et une deuxième paroi circonférentielle (564), formées sur le manchon (522) et empilées l'une sur l'autre, et une broche d'absorption d'énergie (568), passant à travers la première paroi circonférentielle (562) et la deuxième paroi circonférentielle (564) et reliée à la tige de liaison (542), la première paroi circonférentielle (562) présente une première fente traversante (562a) pour le passage en coulissement de la broche d'absorption d'énergie (568) à travers celle-ci, la deuxième paroi circonférentielle (564) présente une deuxième fente traversante (564a), chevauchant partiellement la première fente traversante (562a) et prévue pour que la broche d'absorption d'énergie (568) passe en coulissement à travers celle-ci, une dimension interne (562b) de la première fente traversante (562a) est égale à une dimension externe (568a) de la broche d'absorption d'énergie (568), la deuxième fente traversante (564a) s'étend le long d'une direction de coulissement entre la tige de liaison (542) et le manchon (522), et une dimension de fente (564b) de la deuxième fente traversante (564a) dans la direction de coulissement est plus grande qu'une dimension de fente (562b) de la première fente traversante (562a) dans la direction de coulissement, de sorte que la broche d'absorption d'énergie (568) heurte un bord de fente de la première fente traversante (562a) et coulisse dans une partie de la deuxième fente traversante (564a) ne chevauchant pas la première fente traversante (562a), de manière à laisser le bord de fente de la première fente traversante (562a) se détruire structurellement une fois que le mouvement relatif a lieu,
dans lequel le corps d'amortissement (56a) comporte en outre une troisième paroi circonférentielle (566), formée sur le manchon (522), la troisième paroi circonférentielle (566) et la deuxième paroi circonférentielle (564) se chevauchant, la troisième paroi circonférentielle (566) présente une troisième fente traversante (566a), chevauchant partiellement la première fente traversante (562a) et la deuxième fente traversante (564a) et prévue pour que la broche d'absorption d'énergie (568) coulisse à travers celle-ci, la troisième fente traversante (566a) s'étend le long de la direction de coulissement, et une dimension de fente (566b) de la troisième fente traversante (566a) dans la direction de coulissement est plus grande que la dimension de fente (564b) de la deuxième fente traversante (564a) dans la direction de coulissement, de sorte que la broche d'absorption d'énergie (568) heurte un bord de fente de la deuxième fente traversante (564a) et coulisse dans une partie de la troisième fente traversante (566a) ne chevauchant pas la deuxième fente traversante (564a), de manière à laisser le bord de fente de la deuxième fente traversante (564a) se détruire structurellement une fois que le mouvement relatif a lieu.
